**Europäisches Patentamt**

**European Patent Office**

**Office européen des brevets**

(11) Veröffentlichungsnummer: **0 017 023**
**B1**

(12) **EUROPÄISCHE PATENTSCHRIFT**

(45) Veröffentlichungstag der Patentschrift: 22.06.83

(21) Anmeldenummer: **80101242.8**

(22) Anmeldetag: **11.03.80**

(51) Int. Cl.³: **C 08 L 27/04, C 08 K 5/09, C 08 K 5/20**

(54) Stabilisator für chlorhaltige Vinylpolymerisate.

(30) Priorität: 21.03.79 DE 2911101

(43) Veröffentlichungstag der Anmeldung:
15.10.80 Patentblatt 80/21

(45) Bekanntmachung des Hinweises auf die Patenterteilung:
22.06.83 Patentblatt 83/25

(84) Benannte Vertragsstaaten:
AT BE CH DE FR GB IT LU NL SE

(56) Entgegenhaltungen:
DE - C - 875 865
FR - A - 1 411 367
FR - A - 2 106 050
US - A - 2 554 142

(73) Patentinhaber: Chemische Werke München Otto
Bärlocher GmbH
Riesstrasse 16
D-8000 München 50 (DE)

(72) Erfinder: Szczepanek, Alfred, Dr. Dipl.-Chem.
Faistenlohestrasse 5
D-8000 München (DE)
Erfinder: Rieber, Gernot, Dr. Dipl.-Chem.
Hofbauernstrasse 1A
D-8000 München 60 (DE)

(74) Vertreter: Patentanwälte Dipl.-Ing. A. Grünecker,
Dr.-Ing. H. Kinkeldey, Dr.-Ing. W. Stockmair,
Dr. rer. nat. K. Schumann, Dipl.-Ing. P.H. Jakob,
Dr. rer. nat. G. Bezold Maximilianstrasse 58
D-8000 München 22 (DE)

## Stabilisator für chlorhaltige Vinylpolymerisate

Die Erfindung betrifft einen Stabilisator für chlorhaltige Vinylpolymerisate mit einem Gehalt an mindestens einem Derivat mindestens einer aliphatischen, mindestens in $\alpha,\beta$-Stellung ungesättigten, geradkettigen oder verzweigten sowie gegebenenfalls substituierten Monocarbonsäure mit 3 bis 22 C-Atomen in der unverzweigten Kette.

Es ist bekannt, daß chlorhaltige Vinylpolymerisate in Abwesenheit von Stabilisatoren bei Einwirkung von Wärme und Licht instabil sind. Während sich die bei den hohen Verarbeitungstemperaturen auftretenden Zersetzungserscheinungen durch bekannte Verarbeitungsstabilisatoren zurückdrängen lassen, stellt die Stabilisierung dieser Polymerisate gegen die im Laufe der Zeit auftretende Wärmealterung und die mit ihr verbundene, sehr unerwünschte Rotverfärbung, beispielsweise von Fensterprofilen und Fassadenplatten, ein bisher ungelöstes Problem dar.

Der vorliegenden Erfindung liegt die Aufgabe zugrunde, einen Stabilisator für chlorhaltige Vinylpolymerisate zu schaffen, mit welchem die bei der Wärmelagerung von chlorhaltigen Vinylpolymerisaten unterhalb der Verarbeitungstemperatur auftretende Wärmealterung bzw. die mit ihr verbundene Rotverfärbung vermieden oder zumindest weitgehend zurückgedrängt werden kann.

Diese Aufgabe ist erfindungsgemäß gelöst durch einen Stabilisator der eingangs genannten Art, der dadurch gekennzeichnet ist, daß das Derivat ein Anhydrid und/oder Amid ist.

Mittels der erfindungsgemäßen Stabilisatoren gelingt es erstmals, die mit der Wärmelagerung bzw. Wärmealterung verbundene Rotverfärbung chlorhaltiger Vinylpolymerisate zu vermeiden.

Die den erfindungsgemäß verbendeten Anhydriden bzw. Amiden zugrundeliegenden Monocarbonsäuren enthalten 3 bis 22 Kohlenstoffatome in der unverzweigten Kette. Vorzugsweise werden Monocarbonsäuren mit 3 bis etwa 10 Kohlenstoffatomen und insbesondere mit 3 bis etwa 7 Kohlenstoffatomen verwendet. Die Monocarbonsäuren können beispielsweise durch eine oder mehrere, an nichtterminalen Kohlenstoffatomen der Kette befindliche Methylgruppen verzweigt sowie beispielsweise durch eine Aminogruppe substituiert sein.

Bevorzugte Beispiele von den erfindungsgemäßen Anhydriden oder Amiden zugrundeliegenden, aliphatischen, mindestens in $\alpha,\beta$-Stellung ungesättigten Monocarbonsäuren sind Acrylsäure, Methacrylsäure, Crotonsäure, Isocrotonsäure, Aminocrotonsäure, Dimethylacrylsäure (Methylcrotonsäure), 2,4-Hexadiensäure (Sorbinsäure), 2,3-Dimethylpropensäure(-1) (Tiglinsäure) und Äthylendimethylacrylsäure.

Nach einer bevorzugten Ausführungsform können die erfindungsgemäßen Stabilisatoren auch noch herkömmliche Verarbeitungs- und/oder Lichtstabilisatoren enthalten. Bevorzugte Beispiele sind hierfür basische Bleisalze anorganischer Säuren, wie etwa basisches Bleisulfat, Bleiweiß, Bleisilikat, basisches Bleiphosphit, basisches Bleiphthalat, basische Bleisalze gesättigter und/oder mittelständig ungesättigter Fettsäuren, wie basisches Bleistearat, andere Metallsalze gesättigter und/oder mittelständig ungesättigter Fettsäuren, wie Calcium-, Barium- und/oder Cadmiumstearat oder basische Bleisalze aromatischer organischer Säuren. Der Begriff "mittelständig ungesättigte Fettsäure" umfaßt keine $\alpha,\beta$-ungesättigten Fettsäuren. Beispiele für mittelständig ungesättigte Fettsäuren sind Ölsäure, Ricinolsäure und Linolsäure. Es hat sich überraschenderweise gezeigt, daß die erfindungsgemäßen Stabilisatoren nicht nur die bei der Lagerung von chlorhaltigen Vinylpolymerisaten unterhalb der Verarbeitungstemperatur auftretende Rotverfärbung zurückdrängen, sondern daß sie in Gegenwart herkömmlicher Verarbeitungsstabilisatoren in synergistischer Wechselwirkung gleichzeitig auch zur weiteren Verbesserung der Verarbeitungsstabilität, Lichtstabilität und Anfangsfarbe des Polymerisats führen.

Bei einer bevorzugten Ausführungsform enthält der Stabilisator als bekannten Verarbeitungs- und/oder Lichtstabilisator mindestens ein Cadmium- und/oder Bariumsalz mindestens einer gesättigten und/oder mittelständig ungesättigten Fettsäure.

Mittels der erfindungsgemäßen Stabilisatoren können nicht nur reine chlorhaltige Vinylpolymerisat-Formmassen, wie Vinylchlorid-, Vinylidenchlorid-, und andere chlorierte Vinylpolymerisate, sondern auch inter- und intramolekulare Polymerisatkombinationen, z.B. Polymerisatmischungen, Mischpolymerisate, Blockmischpolymerisate und Pfropfmischpolymerisate, wie schlagzähe Modifikationen chlorierter Vinylpolymerisate mit beispielsweise Acrylat-, Vinylacetat- oder Äthylen-Vinylacetat-Anteilen, stabilisiert werden. Der in der vorliegenden Anmeldung verwendete Begriff "chlorhaltige Vinylpolymerisate" umfaßt sämtliche der vorgenannten Produkte.

Die erfindungsgemäßen Stabilisatoren eignen sich zum Herstellen stabilisierter chlorhaltiger Vinylpolymerisate, wobei man in das zu stabilisierende Vinylpolymerisat mindestens einen erfindungsgemäßen Stabilisator einarbeitet. Die hierzu verwendeten Mengen der erfindungsgemäßen Stabilisatoren betragen zweckmäßigerweise 0.01 bis 10 Gewichtsteile, vorzugsweise 0,2 bis 2,5 Gewichtsteile, bezogen auf 100 Gewichtsteile des chlorhaltigen Vinylpolymerisats. Für mit Cadmium- und/oder Barium-Salzen von Fettsäuren als übliche Verarbeitungs- und/oder Lichtstabilisatoren stabilisierte Formmassen werden vorzugsweise 0,5 bis 2,5 Gewichtsteile des erfindungsgemäßen Stabilisators eingesetzt. Bei mit einem oder mehreren herkömmlichen Bleistabilisatoren als Verarbeitungs und/oder Lichtstabilisatoren stabilisierten Formmassen sind im allgemeinen bereits 0,2 bis 1,0 Gewichtsteile des erfindungsgemäßen Stabilisators ausreichend.

Die erfindungsgemäß hergestellten stabilisierten chlorhaltigen Vinylpolymerisate sind aufgrund ihres Gehalts an dem erfindungsgemäßen Stabilisator neue Produkte.

Die Herstellung der erfindungsgemäßen Stabilisatoren, nämlich der Anhydride und/oder Amide aliphatischer, mindestens in $\alpha,\beta$-Stellung ungesättigter Carbonsäuren kann nach sämtlichen bekannten Methoden der Herstellung von Anhydriden oder Amiden von Carbonsäuren erfolgen. Den erfindungsgemäßen Stabilisatoren können in üblicher Weise herkömmlich, bekannte Verarbeitungs- und/oder Lichtstabilisatoren sowie andere Zusätze, wie beispielsweise reine Gleitmittel, zugesetzt werden, falls dies erwünscht ist.

Die erfindungsgemäßen Stabilisatoren können auch in situ in der Schmelze von mitverwendeten organischen Gleitmitteln, wie Paraffinen oder Fetten, direkt hergestellt werden. Weiterhin können Stabilisatorkombinationen aus den erfindungsgemäßen Wärmealterungsstabilisatoren und bekannten Verarbeitungs- und/oder Lichtstabilisatoren auf der Basis von basischen Bleisalzen anorganischer Säuren, gesättigter und/oder mittelständig ungesättigter Fettsäuren oder aromatischer organischer Säuren oder auf Basis von Cadmium- und/oder Bariumsalzen gesättigter und/oder mittelständig ungesättigter Fettsäuren ebenfalls in situ in der Schmelze von schmelzbaren Blei-, Cadmium- und/oder Bariumverbindungen und/oder mitverwendeten organischen Gleitmitteln direkt hergestellt werden.

Die Beispiele erläutern die Erfindung.

Die in den Beispielen 1 bis 5 sowie in dem Vergleichsbeispiel angegebenen Zahlen für die einzelnen Komponenten sind jeweils Gewichtsteile.

Die in den Beispielen 1 bis 5 angegebenen Werte der Alterungsstabilität wurden wie folgt ermittelt.

Als zu stabilisierendes Polymerisat wurde ein handelsübliches Suspensions-Polyvinylchlorid mit einem K-Wert von 65 bis 70 (in den Beispielen als PVC bezeichnet) eingesetzt. (Untersuchungen ergaben, daß mit anderen handelsüblichen Polyvinylchlorid-Typen, auch mit schlagzäh modifizierten, ähnliche Ergebnisse erhalten wurden).

Durch Kaltmischen der jeweiligen Zusammensetzung, Angelieren auf einer Walze während 5 Min. bei 180°C und Anpressen der Felle während 5 Min. bei 180°C wurden Preßplatten hergestellt. Es wurden jeweils wärmealterungsstabilisierte und nicht stabilisierte 50 x 20 x 2 mm große Preßplatten vor und nach der mindestens 12 Stunden im Wärmeschrank bei 100°C an der Luft durchgeführten Wärmealterung einem Farbvergleich unterzogen. Das Farbverhalten der Preßplatten bei der Wärmelagerung wurde durch die Noten 1 bis 7 beschrieben, die folgende Bedeutung haben:

1=sehr gute Wärmealterungsstabilität (farblich von den nicht-wärmegelagerten und nicht-wärmealterungsstabilisierten Preßplatten nicht zu unterscheiden oder farblich sogar verbessert).

2=gute Wärmealterungsstabilität (farblich gegenüber den nicht-wärmegelagerten und nicht-wärmealterungsstabilisierten Preßplatten nur wenig vergraut oder vergilbt, jedoch ohne Rosastich).

3=befriedigende Wärmealterungsstabilität (farblich gegenüber den nicht-wärmegelagerten und nicht-wärmealterungsstabilisierten Preßplatten deutlich verfärbt, im allgemeinen vergilbt, jedoch ohne Rosastich).

4=hellrosa-Verfärbung
5=rosa-Verfärbung
6=dunkelrosa-Verfärbung
7=violett-Verfärbung

Beispiele 1 bis 5

Zurückdrängung der Rotverfärbung von bleistabilisierten PVC mit Anhydriden und Amiden $\alpha,\beta$-ungesättigter aliphatischer Carbonsäuren (Verarbeitungsstabilisator: dreibas. Bleisulfat).

3

| Beispiel Nr. | PVC | dreibas. Bleisulfat | Paraffin (Erweichungsp. ca. 50°C) | Walrat | Titandioxid | Wärmealterungsstabilisator | Resultat der Wärmelagerung bei 100°C nach 12 Stunden |
|---|---|---|---|---|---|---|---|
| Crotonsäureäthylhexylamid — 1 | 100 | 2,0 | 0,3 | 0,8 | 3,0 | 0,3 | 2 |
| Methacrylsäureoctadecylamid — 2 | | | | | | | 3 |
| Methacrylsäurediäthanolamid — 3 | | | | | | | 2 |
| Crotonsäureanhydrid — 4 | | | | | | | 1 |
| Dimethylacrylsäureanhydrid — 5 | | | | | | | 1 |
| ohne (Vgl. beispiel) | | | | | | | 6 |

## Patentansprüche

1. Stabilisator für chlorhaltige Vinylpolymerisate mit einem Gehalt an mindestens einem Derivat mindestens einer aliphatischen, mindestens in $\alpha,\beta$-Stellung ungesättigten, geradkettigen oder verzweigten sowie gegebenenfalls substituierten Monocarbonsäure mit 3 bis 22 C-Atomen in der unverzweigten Kette, dadurch gekennzeichnet, daß das Derivat ein Anhydrid und/oder Amid ist.

2. Stabilisator nach Anspruch 1, dadurch gekennzeichnet, daß die Monocarbonsäure Acrylsäure, Methacrylsäure, Crotonsäure, Isocrotonsäure, Aminocrotonsäure, Dimethylacrylsäure (Methylcrotonsäure), 2,4-Hexadiensäure (Sorbinsäure), 2,3-Dimethylpropensäure (-1) (Tiglinsäure) und/oder Äthylendimethylacrylsäure ist.

3. Stabilisator nach Anspruch 1 oder 2, dadurch gekennzeichnet, daß er weiterhin mindestens einen bekannten Verarbeitungs- und/oder Lichtstabilisator für chlorhaltige Vinylpolymerisate enthält.

4. Stabilisator nach Anspruch 3, dadurch gekennzeichnet, daß er als bekannten Verarbeitungs- und/oder Lichtstabilisator mindestens ein basisches Bleisalz von anorganischen Säuren, gesättigten und/oder mittelständig ungesättigten Fettsäuren und/oder aromatischen organischen Säuren enthält.

5. Stabilisator nach Anspruch 3, dadurch gekennzeichnet, daß er als bekannten Verarbeitungs- und/oder Lichtstabilisator mindestens ein Cadmium- und/oder Bariumsalz mindestens einer gesättigten und/oder mittelständig ungesättigten Fettsäure enthält.

## Claims

1. A stabiliser for chlorine-containing vinyl polymers, comprising a proportion of at least one derivative of at least one monocarboxylic acid which is unsaturated at least in the $\alpha,\beta$ position, is straight-chained or branch-chained and possibly substituted, and contains 3 to 22 C atoms in the unbranched chain, characterised in that the derivative is an anhydride and/or amide.

2. A stabiliser as claimed in claim 1, characterised in that the monocarboxylic acid is acrylic acid, methacrylic acid, crotonic acid, isocrotonic acid, aminocrotonic acid, dimethylacrylic acid (methylcrotonic acid), 2,4-hexadienoic acid (sorbic acid), 2,3-dimethylpropenoic acid (-1) (tiglic acid) and/or ethylenedimethylacrylic acid.

3. A stabiliser as claimed in claim 1 or 2, characterised by further containing at least one known processing and/or light stabiliser for chlorine-containing vinyl polymers.

4. A stabiliser as claimed in claim 3, characterised by containing, as the known processing and/or light stabiliser, at least one basic lead salt of inorganic acids, saturated and/or centrally unsaturated fatty acids, and/or aromatic organic acids.

5. A stabiliser as claimed in claim 3, characterised by containing, as the known processing and/or light stabiliser, at least one cadmium and/or barium salt of at least one saturated and/or centrally unsaturated fatty acid.

**Revendications**

1. Stabilisant pour des polymères vinyliques contenant du chlore, comportant au moins un dérivé d'au moins un acide monocarboxylique aliphatique, au moins insaturé en position $\alpha,\beta$, à chaîne droite ou ramifiée, éventuellement subsituté, possédant de 3 à 22 atomes de carbone dans la chaîne non ramifiée, caractérisé en ce que le dérivé est un anhydride et/ou un amide.

2. Stabilisant suivant la revendication 1, caractérisé en ce que l'acide monocarboxylique est l'acide acrylique, l'acide méthacrylique, l'acide crotonique, l'acide isocrotonique, l'acide amino-crotonique, l'acide diméthylacrylique (acide méthylcrotonique), l'acide 2,4-hexadiénoïque (acide sorbique) l'acide 2,3-diméthylpropénoïque (-1) (acide tiglique) et/ou l'acide éthylène-diméthylacrylique.

3. Stabilisant suivant l'une quelconque des revendications 1 et 2, caractérisé en ce qu'il contient en outre au moins un stabilisant vis-à-vis de la mise en oeuvre ou transformation et/ou vis-à-vis de la lumière connu pour les polymères vinyliques contenant du chlore.

4. Stabilisant suivant la revendication 3, caractérisé en ce qu'à titre de stabilisant vis-à-vis de la mise en oeuvre ou transformation et/ou vis-à-vis de la lumière, il contient au moins un sel de plomb basique d'acides inorganiques, d'acides gras saturés et/ou moyennement insaturés et/ou d'acides organiques aromatiques.

5. Stabilisant suivant la revendication 3, caractérisé en ce qu'à titre de stabilisant vis-à-vis de la mise en oeuvre ou transformation et/ou vis-à-vis de la lumière connu, il contient au moins un sel de cadmium et/ou de baryum d'un acide gras saturé et/ou moyennement insaturé.